# EUROPÄISCHE PATENTSCHRIFT

(11) **EP 0 946 893 B1**
(45) Veröffentlichungstag und Bekanntmachung des Hinweises auf die Patenterteilung: **17.04.2002**
(21) Anmeldenummer: 97951798.4
(22) Anmeldetag: 20.11.1997
(51) Int. Cl.: G02B 27/01

(54) **INFORMATIONSANZEIGESYSTEM FÜR MINDESTENS EINE PERSON**
INFORMATION DISPLAY SYSTEM FOR AT LEAST ONE PERSON
SYSTEME D'AFFICHAGE POUR AU MOINS UNE PERSONNE

(30) Priorität: 20.12.1996 DE 19653594; 28.02.1997 DE 29703659 U
(43) Veröffentlichungstag der Anmeldung: 06.10.1999
(73) Patentinhaber: SIEMENS AKTIENGESELLSCHAFT, 80333 München (DE)
(72) Erfinder: KLEINSCHMIDT, Peter, D-81735 München (DE)
(86) Internationale Anmeldenummer: DE9702731
(87) Internationale Veröffentlichungsnummer: WO9828649

(56) Entgegenhaltungen:
- EP-A- 0 194 196
- EP-A- 0 433 145
- GB-A- 2 022 285
- GB-A- 2 246 900
- US-A- 4 740 780
- US-A- 4 805 988
- US-A- 5 506 595

## Beschreibung

Die Erfindung betrifft ein Informationsanzeigesystem für mindestens eine Person.

Informationsanzeigesysteme für Personen oder Benutzer können vielfach verwendet werden. Ein Beispiel ist die Vermittlung von Informationen für den Fahrer eines Fahrzeuges, z.B. eines Kfz. Um den Fahrer mit Informationen z.B. über die Verkehrssituation zu informieren, können elektronische Leitund Informationssysteme am Armaturenbrett eines Kfz angebracht werden, wobei Einbaupositionen bevorzugt werden, die möglichst hoch, also nahe der Windschutzscheibe sind. Andere Geräte zur Informationsanzeige können mit einer Halterung oder einem Schwenkarm rechts vom Lenkrad bei Linkssteuerung möglichst hoch am Armaturenbrett befestigt werden. Alle diese Einbaumaßnahmen verlangen aber, daß der Fahrer den Blick von der Straße zum Informationsanzeigesystem lenkt. Außerdem muß er die Scharfeinstellung seines Auges von unendlich auf die kurze Distanz zum Anzeigesystem ändern. Alterssichtige benötigen dafür ggf. eine andere Brille. Im übrigen sind die Displays für die Anzeige meistens klein. Zukunftsstudien zeigen ein Großdisplay, das in der Nähe der Windschutzscheibe auf der Armaturenkonsole angebracht ist. Das Problem der unterschiedlichen Sehentfernung ist dann zwar reduziert, jedoch noch nicht völlig beseitigt. Zudem sind Großdisplays teuer.

EP 433 145 A1 offenbart ein Informationsanzeigesystem mit einem Head-up-Display und optischen Mitteln zur Ausrichtung der Darstellung auf eine Person.

GB 2 022 285 A offenbart die Aufteilung von Information auf ein Head-down-Display und ein Head-up-Display.

Das der Erfindung zugrundeliegende Problem besteht darin, ein Informationsanzeigesystem zu schaffen, das Information möglichst gut darstellt, wobei auch bei Bewegung des Betrachters noch eine ausreichende Ablesbarkeit eines Ausgabedisplays gewährleistet wird.

Dieses Problem wird gemäß den Merkmalen des Patentanspruchs 1 gelöst.

Demnach verfügt das Informationsanzeigesystem über eine erste Anzeigeeinheit zur Darstellung von Information in der Windschutzscheibe (WS, WSS) eines Fahrzeugs als ein Head-Up-Display, eine zweite Anzeigeeinheit (RBB) zur Darstellung von Information auf und/oder in dem Armaturenbrett (ARM) des Fahrzeugs und einen Beleuchtungsstrahlengang, über den die Information darstellbar ist. Teile der Information sind stufenlos in der ersten Anzeigeeinheit und/oder in der zweiten Anzeigeeinheit darstellbar, indem ein Fresnel-Prisma zur Ablenkung eines Bereichs des Beleuchtungsstrahlengangs vorgesehen ist, das in dem Beleuchtungsstrahlengang verschiebbar ausgeführt ist. Dadurch wird dem Betrachter die Möglichkeit angeboten, auszuwählen zwischen der Information, die er auf den Armaturen und/oder auf dem Head-Up-Display zu sehen wünscht. Dazu ist insbesondere eine verschiebbare Einheit aus einem Fresnel-Prisma zur Ablenkung und einer Beleuchtungslinse zur Bündelung des Beleuchtungsstrahlengangs vorgesehen. Schließlich weist das Informationsanzeigesystem optische Mittel auf, die die Darstellung von Information durch die erste Anzeigeeinheit in einer Blickrichtung der Person bewirken, indem der Beleuchtungsstrahlengang auf die Blickrichtung der Person adaptierbar ist.

Zweckmäßigerweise wird eine Bedienanordnung vorgesehen, durch die die darzustellende Information einfach abrufbar ist.

Um das Blickfeld des Anwenders oder Fahrers möglichst wenig zu stören, ist es zweckmäßig, die Darstellungen der Information nahe der Unterkante bzw. der Oberkante oder senkrecht ausgerichtet am rechten oder linken Rand der Scheibe einzuspiegeln.

Um den Ort der Einspiegelung der Information in die Scheibe und damit der Ort des virtuellen Bildes verstellbar zu machen, ist es zweckmäßig, das Ausgabedisplay ebenfalls verstellbar anzuordnen, bzw. das erste optische Mittel so zu realisieren, daß sie schwenkbar sind. Als erstes optisches Mittel kann dabei z.B. ein Hohlspiegel verwendet werden, der in Blickrichtung des Anwenders angeordnet ist und die Darstellung in Blickrichtung des Anwenders hin spiegelt und zudem schwenkbar ausgeführt sein kann, um den Ort des Entstehens des virtuellen Bildes einstellbar zu machen. Der Hohlspiegel kann dann so angeordnet sein, daß mit ihm das Ausgabedisplay verschließbar ist.

Das Ausgabedisplay kann derart betrieben werden, daß es eine aus mindestens zwei Teilbereichen bestehende Darstellung der Information erzeugt, von denen der eine Teilbereich keine Interaktionsmöglichkeit mit dem Anwender anzeigt, der andere Teilbereich mit der Bedienanordnung ansprechbarer Aggregate bzw. Geräte zeigt.

Dann kann das Ausgabedisplay über die Bedienanordnung von dem Anwender angesteuert werden und die dort angezeigte Information ausgewählt werden. Die Teilbereiche können Landkarten, Ausschnitte aus Landkarten oder mögliche Einstellungen der Bedienanordnungen darstellen. Dabei kann ein Teilbereich eine Landkarte und das virtuelle Bild ein wählbarer vergrößerter Ausschnitt der Landkarte und die Landkarte darstellen.

Es kann zweckmäßig sein, das zweite optische Mittel derart auszuführen, daß die virtuellen Bilder für mehr als eine Person erkennbar sind, wobei die Personen unabhängig voneinander die darzustellende Information mit der Bedienanordnung abrufen können. Es ist jedoch auch möglich, daß nur eine Person mit der Bedienanordnung die darzustellende Information abrufen kann und somit z.B. dem Fahrer eines Kfz die Information zuspielen kann, die er gerade benötigt, ohne daß der Fahrer die Bedienanordnung betätigen muß.

Um die vom Ausgabedisplay abgegebenen Darstellungen immer in das Auge des Anwenders fallen zu lassen, ist es zweckmäßig, eine auf die Person ausgerichtete Videokamera vorzusehen, die den Ort der Augen der Person oder des Anwenders feststellt und verfolgt und das erste optische Mittel, z.B. den Hohlspiegel, entsprechend steuert.

Für die Realisierung der Bedienanordnung gibt es unterschiedliche Lösungen. Als Bedienanordnung kann eine Bedieneinrichtung mit einem blind bedienbaren Navigator z.B. mit Bedienelementen und/oder mit Spracheingabemittel vorgesehen werden, und eine Rückmeldeanordnung, die die Bedienvorgänge quittiert und Hinweise für weitere, ausführbare Bedienschritte gibt.

Es könnte zweckmäßig sein, das Spracheingabemittel als Richtmikrophon auszuführen. Dann ist es zweckmäßig, die Richtkeule zur Befehlseingabe schwenkbar zu machen und immer auf den Mund des Anwenders, z.B. des Fahrers, auszurichten. Eine solche Bedienanordnung kann weiterhin so ausgeführt sein, daß eine auf die Person gerichtete Videokamera und eine Bilderkennungssoftware vorgesehen wird, durch die dre Position des Mundes des Anwenders bestimmt wird und dementsprechend das Mikrophon so gesteuert wird, daß es immer auf den Mund des Anwenders ausgerichtet ist. Wenn die Bedienanordnung bei einem Kfz vorgesehen wird, ist es zweckmäßig, die Videokamera im Bereich der Windschutzscheibe anzuordnen und auf den Mund des Fahrers auszurichten um dementsprechend das Empfindlichkeitsmaximum der Richtcharakteristik des Mikrophons auf den Mund hin einzustellen.

Um das Blindbedienungskonzept wirksam auszuführen, ist eine Rückmeldeanordnung vorgesehen, die vorteilhafterweise eine akustische Sprachausgabe aufweist. Weiterhin ist es vorteilhaft, daß bei einer Mehrzahl von bedienbaren Geräten, z.B. einem Kfz und einem Telefon, eine virtuelle Abbildung des jeweils angesteuerten Gerätes auf einem Display vorgesehen ist.

Die Rückmeldeanordnung kann neben der Sprachausgabe auch eine visuelle Anzeigevorrichtung aufweisen, wobei die visuelle Vorrichtung in der Bedieneinrichtung angeordnet sein kann, aber auch im bedienbaren Gerät. Mit der visuellen Anzeigevorrichtung können also die bedienbaren Geräte dargestellt werden aber auch vom Navigator bedienbare symbolisierte Bedienelemente der Bedieneinrichtung.

Vorteilhaft ist es weiterhin, wenn die visuelle Anzeigevorrichtung die Bedienvorgänge an den Geräten dadurch darstellt, daß sich die symbolisierten Bedienelemente durch die Bedienung dynamisch ändern können.

Der Navigator der Bedieneinrichtung kann als Bedienfeld ausgeführt werden, das in der Nähe der Handlage des Benutzers zweckmäßigerweise angeordnet wird. Diese Lösung ist besonders bei Verwendung in einem Kfz sinnvoll, da hier das Bedienfeld z.B. in das Lenkrad integriert werden kann.

Weiterhin kann die Bedieneinrichtung ein Mikrophon mit Spracherkenner aufweisen, und somit die Bedienung mit Hilfe der Sprache ermöglichen. Zweckmäßig ist es dann, wenn der Spracherkenner unterschiedliche, an das zu bedienende Gerät angepaßte Sprachmodelle aufweist.

Weiterhin ermöglicht es die Erfindung, daß mit Hilfe von Videoprojektions-Techniken große Anzeigeflächen erzielt werden können und doch nur Kosten für kleine Displays anfallen. Die Helligkeit für den Betrachter kann mittels Rückprojektionsdisplay und/oder eingespiegeltes verdunkelbares Head-Up-Display bei Verwendung vorgebbarer Beleuchtungsstrahlengänge gesteigert und durch Pupillennachführung besonders im Auge des Betrachters wirksam werden.

Die Windschutzscheibe kann wahlweise an den für die Reflexion benötigten Flächenanteilen mit reflexionserhöhenden und/oder relfexionsmindernden Schichten ausgestattet werden. Das Projektionsdisplay kann ausgeführt sein als aus einem Videodisplay (z.B. von hinten durchleuchtbares LCD-Display) einer Lichtquelle für die Durchleuchtung und einer Verstellmöglichkeit für das Display und/oder die Lichtquelle bestehend.

Beispielsweise im Kfz ist es zweckmäßig, wenn das Informationsanzeigensystem eine Video-Ruck-Projektion enthält, die im Raum unter dem Armaturenbrett angeordnet sein kann. Weiterhin kann ein Projektionsschirm wahlweise aus Kunststoff oder Glas mit mittlerer oder verschwindender Diffusität im oder am Armaturenbrett, für den Betrachter gut sichtbar, angeordnet sein. Die Einrichtung für die Rückprojektion selbst kann aus einer Lampe, einem vorgebbar kleinen Videodisplay und optischen Elementen zur Vergrößerung bestehen, die derart angeordnet sind, daß ein reelles vergrößertes Bild des Videodisplays von innen auf dem Projektionsschirm geworfen wird.

Weiterhin kann das Prisma, das den Beleuchtungsstrahlengang zum Auge des Betrachters hin ablenkt, und/oder eine Linse, die das Licht in das Auge des Betrachters bündelt, in unmittelbarer Nähe des Projektionsschirms angeordnet sein.

Wahlweise können jeweils oder in Kombination der Projektionsschirm, das Prisma und die Beleuchtungslinse als Fresnel-Prismen oder Fesnel-Linsen ausgeführt sein. Vorteilhaft ist es, wenn sie bei entsprechender Aufrauhung die Funktion der Diffusität des Projektionsschirms übernehmen.

Durch mechanische oder motorische Verstellmöglichkeiten der Beleuchtungsquelle (Lampe) oder des Beleuchtungsstrahlengangs allgemein kann verschieden großen Betrachtern oder bei Wechsel der Sitzposition des Betrachters optimale Sicht auf das Projektionsdisplay gewährleistet werden.

Weiterhin kann ein Spiegelkasten zur Anwendung kommen, der allseitig durch Wände abgeschlossen ist und in den das Projektionsdisplay durch eine Öffnung oder durchsichtige Stelle der Wand projiziert und der den Projektionsschirm als Wand benutzt und mindestens einen Spiegel im Strahlengang enthält. Alternativ dazu kann sich das Projektionsdisplay auch im Spiegelkasten befinden. Eine Ablenkvorrichtung (Spiegel) im Spiegelkasten kann dabei so angeordnet sein, daß die Strahlen des Projektionsdisplays die Augen des Betrachters treffen (Blick-Folger). Vorzugsweise ist die Ablenkvorrichtung nahe am Projektionsschirm angeordnet, und wird mittels mechanischer oder elektromechanischer Antriebe bewegt. Als Ablenkvorrichtung können mindestens ein Kippspiegel oder gegenläufig gedrehte Prismen verwendet werden.

Der Beleuchtungsstrahlengang kann mit Hilfe einer Bildauswertung der Videokamera und der beschriebenen verstellbaren Ablenkvorrichtung derart abgeglichen werden, daß er in die Augen des Betrachters fällt. Ein Mittel zur Regelung kann den Beleuchtungsstrahlengang so lange nachstellen, bis von der Videokamera im Gesicht maximale Helligkeit festgestellt wird.

Weiterhin ist es vorteilhaft, wenn im Spiegelkasten vor dem Projektionsschirm ein Spiegel mit einer Krümmung vorhanden ist. Je nach Lage kann dieser Spiegel dadurch einen Teil der Abbildungseigenschaften des Abbildungsobjektivs und/oder der Lichtbündelung mitübernehmen. Durch die Krümmung kann die Geometrie des Strahlengangs bei gleichen Abbildungsverhältnissen besser dem vorhandenen Platz angepaßt werden. Dabei kann der Spiegel nahe dem Projektionsschirm entweder konkav sein und damit durch entsprechend vorgebbare Krümmung bereits die Lichtbündelung auf das Gesicht des Betrachters bewirken/vereinfachen, oder der Spiegel nahe dem Projektionsschirm ist konvex und ermöglicht somit eine knappe Einbaukonstruktion. Bei dem konvexen Spiegel ist es vorteilhaft, im Bereich des Projektionsschirms eine Linse oder eine Fresnel-Linse anzuordnen, die die Lichtbündelung ins Gesicht des Betrachters erreicht.

Auch kann der gekrümmte Spiegel vorteilhaft asphärisch sein. Es wird somit zunächst auf eine flächengetreue Abbildung auf bspw. der Windschutzscheibe verzichtet. Allerdings kann durch elektronische Vorentzerrung auf dem Videodisplay die flächengetreue Abbildung errechnet werden. Somit kann die durch die Wölbung der Windschutzscheibe bewirkte, von der Betrachterposition abhängige, Verzerrung ausgeglichen werden, indem vom Videodisplay eine dazu inverse Verzerrung dargestellt und in die Windschutzscheibe eingespiegelt wird. Da für jede Sitzposition des Betrachters eine andere Verzerrung vorherrscht, muß für jede Sitzposition auch eine anderes Bild von dem Videodisplay eingespiegelt werden. Es kann weiterhin vorteilhaft sein, Zwischenwerte zu interpolieren. Die Videokamera liefert aus der Beobachtung des Fahrers die notwendigen Positionskoordinaten, so daß das jeweils anzuzeigende Bild auf dem Videodisplay entsprechen elektronisch entzerrt wird. Die Herstellung vorverzerrter Bilder kann durch Probieren erfolgen oder mit CAD-Daten der Windschutzscheibe und Strahlengang-Berechnungsprogrammen berechnet werden.

Eine zweckmäßige Weiterbildung des Informationsanzeigesystems besteht in einem Mittel zur Regelung der Helligkeit des Videodisplays, indem Graufilter (Neutraldichte-Filter) oder gegeneinander verdrehbare Polarisationsfilter einschwenkbar angeordnet sind, um Licht zu absorbieren. Diese Filter werden dann benötigt, wenn die elektronische Abdunklung der Lichtquelle nicht ausreicht und auch das Videodisplay eine weitere Abdunklung nicht zuläßt.

Weiterhin ist es vorteilhaft, wenn die in der Helligkeit steuerbare Beleuchtungseinrichtung neben einer Hauptlampe eine Nebenlampe enthält und daß im Strahlengang optische Mittel vorgesehen sind, wie z.B. ein teildurchlässiger Spiegel, die beide Lichtquellen virtuell als eine Lichtquelle erscheinen lassen. Dabei ist es zweckmäßig, wenn die Hauptlampe die stärkere Lampe ist und ihr Licht vom teildurchlässigen Spiegel bevorzugt durchgelassen wird. Diese Hauptlampe kommt bei sehr hellen Szenen zum Einsatz. Bei dunklen Szenen, z.B. Nachts, kann dann die vorgebbar schwächer leuchtende Nebenlampe zum Einsatz kommen. Im Falle einer Fehlfunktion einer Lampe, kann die jeweils noch intakte Lampe eine Not-Anzeigefunktion übernehmen.

Das Informationsanzeigensystem kann vorteilhafterweise oberhalb der Windschutzscheibe (als Beispiel im Kfz) eine Videokamera enthalten, die den Betrachter beobachtet, vorzugsweise dessen Gesicht. Der Beleuchtungsstrahlengang kann vorzugsweise so modifiziert werden, daß die Lichtenergie in die Augen des Betrachters fällt. Vorteilhaft ist hierbei, daß zusätzliche Beleuchtung entfallen kann und beispielsweise im Auto bis auf den Gesichtskreis des Betrachters des Informationsanzeigesystems Dunkelheit vorherrscht.

Die Helligkeit des Informationsanzeigesystems kann vorteilhaft automatisch an die Helligkeit der beobachteten Szene angepaßt werden. Dabei sei angemerkt, das mit 'Szene', auf das Beispiel einer Verwendung des Informationszentrums im Kfz bezogen, das betrachtete Verkehrsgeschehen gemeint ist. Dabei soll weiterhin dem Betrachter individuell die Möglichkeit einer Verstellung der Helligkeit der Aneigenelemente, unabhängig von einer möglicherweise vorhandenen automatischen Helligkeitsanpassung, vorbehalten sein.

Bei der automatischen Helligkeitsanpassung der Szene an den Betrachter kann eine Referenzfläche dienen, die beispielsweise das Gesicht des Betrachters selbst oder aber der Dachhimmel im Kfz darstellt. Vorteilhaft dabei ist die Messung der Helligkeit mittels eines Belichtungsmessers oder mittels der Videokamera selbst. Eine Unterscheidung zwischen natürlichem, von der Straßenhelligkeit erzeugtem Licht und dem von der Videoprojektion herrührenden Licht kann durch Modulation und Demodulation des Videolichts vorgenommen werden (halbbildweise Auswertung der von der Videokamera gelieferten Information).

Das Informationsanzeigesystem kann vorteilhaft aus zwei getrennten Projektionsdisplays bestehen, einem für die Projektion auf die Armaturen und einem für das Head-Up-Display. Zwei getrennte Projektionsdisplays haben den Vorteil der Redundanz bei Ausfall eines Projektionsdisplays.

Weiterhin ist es vorteilhaft, ein einziges Projektionsdisplay zu verwenden, das mittels einer Fresnel-Primsen/-Linsenplatte abwechselnd die zur Strahlablenkung und Fokussierung in beiden Richtungen erforderlichen Prismen-Elemente und Linsen-Elemente ineinanderschachtelt.

Das Projektionsdisplay kann mittels einer Vorwärmeinheit auf Betriebstemperatur aufgeheizt werden.

Eine Ersatz-Beleuchtungseinrichtung ist zweckmäßig, wenn die Beleuchtungseinrichtung (Lampe) ausfällt. Ein automatisches Umschalten auf die Ersatz-Beleuchtung ist weiterhin zweckmäßig.

Fällt die Nachführeinrichtung zur Überwachung der Gesichtsposition des Betrachters des Informationsanzeigesystems aus, so muß eine Standard-Einstellung für die Betrachtung des Projektionsdisplays gewählt werden. Dies kann beispielsweise die Position sein, an der sich der Fahrer des Kfz am häufigsten aufgehalten hat.

Vorteilhaft ist weiterhin die Verwendung einer Nachführeinrichtung die derart ausgeprägt ist, daß zwischen der Lichtquelle und dem Videodisplay ein Spiegel eingefügt ist, der den Strahlengang abknickt. Die Verstellung des Spiegels kann elektronisch oder elektromechanisch in zwei Achsen erfolgen. Es kann zweckmäßig sein, wenn die Nachführeinrichtung nicht jede kleine Positionsänderung proportional ausregelt, sondern erst beim Auftreten vorgebbarer Auslenkungsamplitude, z.B. Bewegung des Betrachters um mehr als eine halbe Kopfbreite, nachgeführt wird. Somit wird die Lebensdauer der Stellmotoren erhöht.

Weiterhin ist es zweckmäßig, wenn Mittel vorgesehen sind, die die Abbildung auf dem Videodisplay elektronisch derart verschieben können, daß sich dem Betrachter ein möglichst großer Ausschnitt der Abbildung, auch bei starker Veränderung der Betrachterposition, darbietet. Dabei kann das Videodisplay in einem Übermaß realisiert sein, so daß im Normalbetrieb eine mittlere Position der Abbildung in das Blickfeld projiziert wird. Verändert der Betrachter nun seine Position, dann kann die Abbildung auf dem Display elektronisch so verschoben werden, daß der Beleuchtungsstrahlengang dem Betrachter immer noch die gesamte Abbildung sichtbar darstellt. Bewegt sich der Betrachter über die Grenze hinaus, die durch Verschiebung der Abbildung auf dem Videodisplay zum Ausgleich der vollständigen Darstellbarkeit der Abbildung für den Betrachter noch möglich ist, so kann die Abbildung weitergehend elektronisch verändert, z.B. verkleinert, werden, so daß der Betrachter immer noch die vollständige Information dargeboten bekommt. Mit dieser Weiterbildung des Informationsanzeigesystems wird der gleiche Effekt erzielt, als wenn der Projektor verschoben würde, so daß der Betrachter den Beleuchtungsstrahlengang weiterfolgen kann. Also entspricht die elektronische Bewegung der Abbildung auf dem Videodisplay (Scrollen einer verkleinerten Abbildung auf dem Videodisplay) einem virtuellen Projektor.

Eine Weiterbildung des Informationsanzeigesystems in eine besteht in der Einrichtung einer Multimedia-Umgebung in Sitzreihungen, wie sie beispielsweise in Bus, Bahn, Flugzeug zu finden sind. In die Lehne des vorangehenden Stuhles wird eine Multimediaeinrichtung integriert.

Das Element für einen "Multimediasitz" besteht aus einem Stuhl mit Sitzfläche und Lehne, vorgesehen für eine Anordnung, bei der vor dem Stuhl ein weiterer Stuhl steht, wobei bei den Stühlen in der ersten Reihe die Sitzflächen entfallen können und in der letzten Reihe die Lehnen vereinfacht ausgeführt sein können. Die Lehnen verfügen über Video-Darstellungsmöglichkeiten in den Rückenlehnen des vorangehenden Stuhls und bei Bedarf über zusätzliche Komponenten wie Lautsprecher, Kopfhörer, Mikrofon, Videokamera und weiteren Interaktionselementen wie beispielsweise Maus, Tastatur, Trackball, Stift, Touchpad, Zapp-Navigator, virtueller Touchscreen und einer Schnittstelle mit festem Kabel, Steckverbindung, Infrarot oder Funk mit individueller Adressiermöglichkeit für dieses Stuhlelement.

Vorteilhaft ist die Video-Darstellungsmöglichkeit wie das oben beschriebene Ausgabedisplay ausgeführt.

Ist eine Videokamera teil des Multimediasitzes, so wird die Videokamera, wie beim Informationsanzeigesystem beschrieben, das Gesicht des Betrachters verfolgen und sicherstellen, daß das Licht für das darzustellende Bild in seine Augen fällt. Weiterhin kann - wie beschrieben - eine Mikrofonkeule dem Mund des Sprechers folgen.

Weiterhin kann mindestens ein Lautsprecher im Ohrenbereich des Multimediasitzes integriert sein, wobei bei Vorhandensein von mehreren Lautsprechern für unterschiedlich große Betrachter mit Hilfe der Videokamera die richtigen Lautsprecher ausgewählt werden können.

Individuelle Kommunikation über DECT und/oder GSM in jedem Multimediastuhl ist eine weitere vorteilhafte Anwendung.

Auch ist es eine Weiterbildung der Erfindung, mehrere Anzeigeeinrichtungen zu einer Einheit zu kombinieren. So kann eine erste, beispielsweise in den Armaturen vorhandene, Anzeigeeinrichtung, die als herkömmliches Display oder als Rückprojektionsdisplay ausgestaltet sein kann, mit einer zweiten Anzeigeeinrichtung, die in Form eines Projektionsdisplays als Head-Up-Display bspw. in die Windschutzscheibe eines Kraftfahrzeugs projiziert wird, kombiniert werden. Dabei besteht die Kombination zweckmäßig darin, daß die erste und die zweite Anzeigeeinrichtung als eine Einheit angesteuert und genutzt werden.

Vorteilhaft kann die Erfindung dahingehend weitergebildet werden, daß das Head-Up-Display in seiner Größe veränderlich ausgeführt ist. So kann eine endliche Liste bestehend aus Telefonnummern, aus denen der Fahrer einen bestimmten Namen auszuwählen wünscht, in der kombinierten Anzeigeeinrichtung dargestellt werden. Wenn mehrere Möglichkeiten zur Auswahl stehen, wird der gewünschte Begriff aus der dargestellten Liste mittels einer vorgebbaren Eingabeeinheit ausgewählt. Dabei ist es möglich, die wahrscheinlichsten Treffer einer Suche nach dem gewünschten Begriff in der Liste oben, also im Head-Up-Display, und damit möglichst im Blickfeld des Benutzers darzustellen, wohingegen unwahrscheinliche Treffer bei der Suche weiter unten, bspw. im Rückprojektionsdisplay, angezeigt werden.

Vorteilhaft kann dabei das Head-Up-Display benutzt werden, um flexibel einen in der Größe veränderbaren Bereich im Blickfeld des Benutzers darzustellen.

Im konkreten Beispiel, beim Führen eines Kraftfahrzeugs, ist die Erfindung ausgestaltet als Kombination aus herkömmlichen Anzeigevorrichtungen im Armaturenbrett, wobei diese auch optisch projiziert werden können, und aus einem Head-Up-Display, das in den Bereich der Windschutzscheibe projiziert wird und in seiner Größe veränderbar ist.

Wie oben bereits angedeutet, kann die Information auf den kombinierten Anzeigeeinheiten priorisiert dargestellt werden, wobei hochpriore Information mehr ins Blickfeld des Benutzers eingebracht wird. Dabei sei als Blickfeld angenommen der Blickwinkel, der resultiert durch den das Verkehrsgeschehen betrachtenden Benutzer.

Eine vorteilhafte Ausprägung der Erfindung besteht darin, den ersten Teil der Anordnung genauso breit wie den zweiten Teil der Anordnung auszugestalten, so daß die Einheit der kombinierten Anzeigevorrichtung auf den ersten Blick vermittelt wird. Zudem sind die beiden Teile der Anordnung breiter als hoch ausgeführt, wobei der zweite Teil der Anordnung (das Head-Up-Display) in seiner Höhe veränderbar ist.

Weiterhin ist es vorteilhaft, wenn für den ersten Teil der Anordnung ein heller Hintergrund für die Darstellung von Zeichen und/oder Symbolen gewählt wird.

Weiterbildungen der Erfindung ergeben sich aus den abhängigen Ansprüchen.

Anhand von Ausführungsbeispielen, die in den Figuren dargestellt sind, wird die Erfindung weiter erläutert.

Es zeigen
- Fig.1: eine Ausführungsform des Informationsanzeigesystems bei Anwendung in einem Kfz als Beispiel, wobei Fig.1a das geschlossene Informationsanzeigesystem und Fig.1b das Informationsanzeigesystems in Betriebsstellung darstellt,
- Fig.2: eine prinzipielle Darstellung des Informationsanzeigesystems bei Anwendung bei einem Kfz von oben betrachtet,
- Fig.3: eine Prinzipdarstellung eines Informationsanzeigesystems mit Ausgabedisplay, erstem optischen Mittel und zweitem optischen Mittel, bei der angezeigt ist, wie die Darstellung in Blickrichtung des Anwenders eingespiegelt wird,
- Fig.4: eine Seitenansicht des Informationsanzeigesystems bei Erzeugung der virtuellen Bilder der Darstellungen an verschiedenen Stellen der Windschutzscheibe bei einem Kfz,
- Fig.5 und Fig.6: weitere Orte, an denen virtuelle Bilder erzeugt werden können,
- Fig.7: ein Beispiel für den Fall, daß mehrere Personen gleichzeitig die virtuellen Bilder beobachten können, z.B. bei Anwendung in einem Kfz,
- Fig.8: ein Ausführungsbeispiel des Informationsanzeigesystems, bei dem das Ausgabedisplay lenkbar angeordnet ist,
- Fig.9: eine mögliche Darstellung auf dem Ausgabedisplay und damit des virtuellen Bildes, das aus mehreren Teilbereichen besteht,
- Fig.10: eine mögliche Darstellung einer Landkarte als virtuelles Bild,
- Fig.11: ein prinzipielle Darstellung der Bedienanordnung,
- Fig.19: ein Bild, das die Videorückprojektion des Projektionsdisplays darstellt,
- Fig.20: ein Bild, das die Videorückprojektion in die Windschutzscheibe (Head-Up-Display) darstellt,
- Fig.21: ein Bild, das einen Multimediasitz skizziert,
- Fig.22: ein Bild, das ein Videodisplay darstellt,
- Fig.23: ein Bild, das die Kombination aus virtuellem Head-Up-Display und Rückprojektions-Display darstellt,
- Fig.24: ein Bild, das die verschiebbare Einheit aus Fresnel-Prisma und Beleuchtungslinse darstellt,
- Fig.25: ein Bild, das die Fresnel-Anordnung für gleichzeitige Anzeige der reellen Rückprojektion und des virtuellen Head-Up-Displays darstellt,
- Fig.26: ein Bild, das einen Querschnitt durch das Cockpit eines Kfz zeigt,
- Fig.27: ein Bild, das einen zusätzlichen Beleuchtungsstrahlengang zur Betrachtung der Armaturen für den Beifahrer darstellt,
- Fig.28: eine Weiterbildung der in Fig.25 beschriebenen Fresnel-Anordnung,
- Fig.29: ein Bild, das die funktionelle Integration des Multimediasitzes veranschaulicht,
- Fig.30: eine Bild, das eine Ausschnittsvergrößerung des Spiegelkastens, der in dem Multimediasitz verwendet wird, zeigt,
- Fig.31: ein Bild, das den klassischen Köhlerschen Beleuchtungsstrahlengang darstellt,
- Fig.32: ein Bild, das den Beleuchtungsstrahlengang für eine Zentrierung auf die Augen des Betrachters darstellt und
- Fig.33: ein Bild, das den Beleuchtungsstrahlengang für eine zentrierung auf die Augen des Betrachters darstellt, wobei ein Kippspiegel verwendet wird,
- Fig.34: eine Skizze, die ein in der Größe veränderliches Head-Up-Display darstellt.

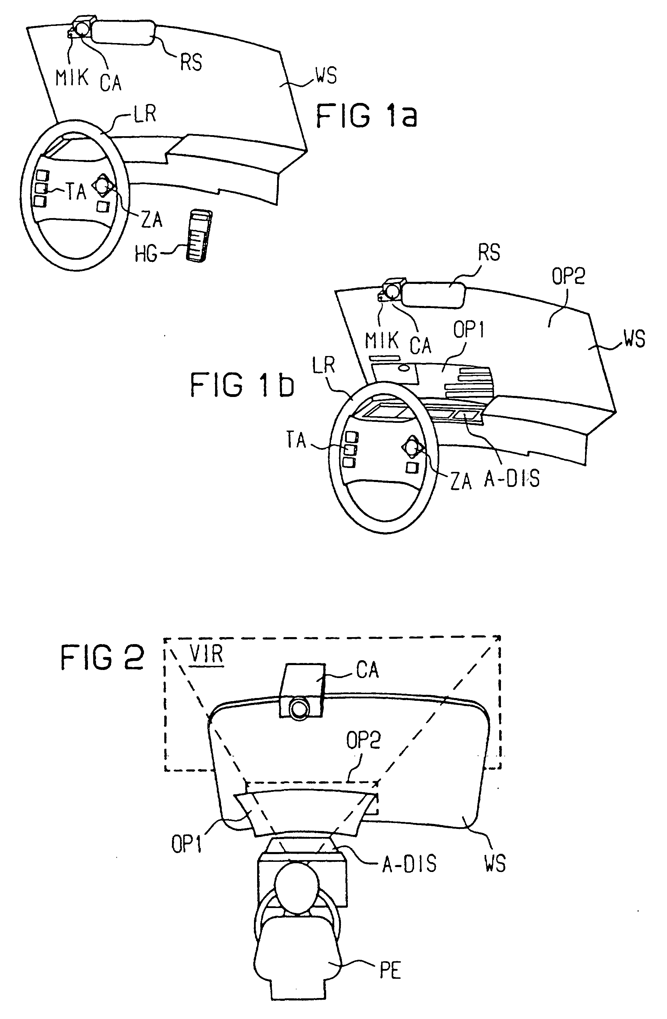

Das Informationsanzeigesystem nach **Fig.**1a, 1b, das als Beispiel die Anwendung in einem Kfz zeigt, weist ein Ausgabedisplay A-DIS auf, auf dem eine Darstellung der anzuzeigenden Information erzeugt wird, ein erstes optisches Mittel OP1, z.B. ein Hohlspiegel, mit dem vom Ausgabedisplay A-DIS abgegebene Lichtstrahlen in die Blickrichtung des Fahrers eingespiegelt werden, ein zweites optisches Mittel OP2, realisiert z.B. als Scheibe WS, in der das virtuelle Bild der Darstellung erzeugt wird und Bedienanordnungen im Lenkrad LR, ausgeführt z.B. als Zappkreuz ZA oder als Handgerät HG. Weiterhin ist neben dem Rückspiegel RS eine Videokamera CA angeordnet und ein Mikrophon MIK. Mit Hilfe der Videokamera CA kann man z.B. die Lage des Mundes des Fahrers oder der Augen des Fahrers feststellen, um z.B. die Einspiegelung der Darstellungen in die Blickrichtung des Fahrers zu steuern oder um das Mikrophon MIK immer direkt auf den Mund des Fahrers auszurichten.

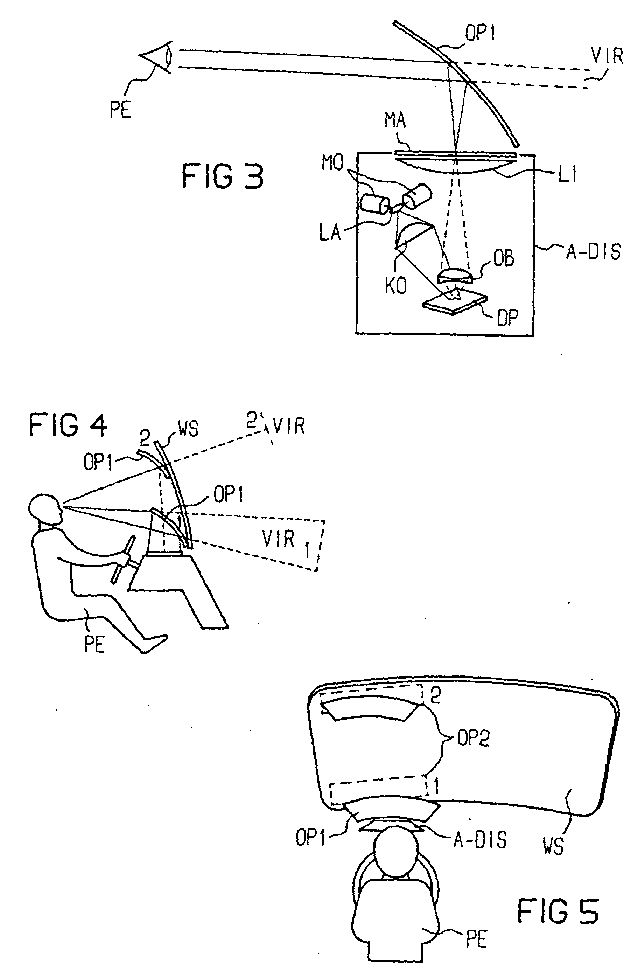

Das Informationsanzeigesystem ist ausführlicher in **Fig.**2 und **Fig.**3 gezeigt. Nach **Fig.**2 ist das Ausgabedisplay A-DIS vor der Person PE, dem Fahrer, angeordnet und erzeugt Darstellungen der anzuzeigenden Information. Diese Darstellungen werden von dem ersten optischen Mittel OP1, z.B. einem Hohlspiegel, in die Blickrichtung des Fahrers projiziert und erscheinen auf dem zweiten optischen Mittel OP2 als virtuelles Bild der Darstellung. Das zweite optische Mittel ist im Ausführungsbeispiel als Windschutzscheibe WS realisiert.

**Fig.**3 zeigt deutlicher wie z.B. das Ausgabedisplay realisiert werden kann. Dieses kann bestehen aus einem Display DP, z.B. einem Multi Spiegelchip, das mit Licht beleuchtet wird, das von einer Lampe LA stammt und das von einem Kondensor KO auf das Display DP gerichtet wird. Die Stellung der Lampe LA kann mit Hilfe von Stellmotoren MO verändert werden. Das vom Display DP ausgehende Licht wird mit Hilfe eines Objektives OB gebündelt, geht durch eine Beleuchtungslinse LI, weiterhin durch eine Mattscheibe MA zu dem ersten optischen Mittel OP1, z.B. einem Spiegelokular, und von dort in die Blickrichtung der Person PE, die die Darstellung als virtuelles Bild VIR z.B. in der Windschutzscheibe sieht.

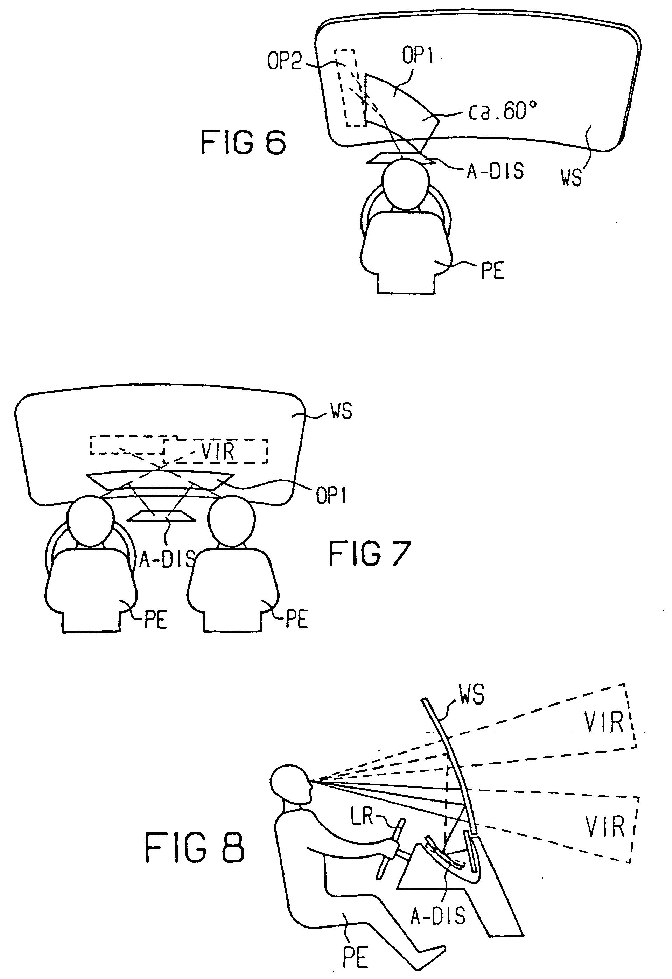

Der Ort, an dem die virtuellen Bilder VIR mit Hilfe des zweiten optischen Mittels erzeugt werden, kann entsprechend **Fig.**4 und **Fig.**5 am oberen Rand oder am unteren Rand der Windschutzscheibe WS sein, wobei der unterschiedliche Ort der virtuellen Bilder durch eine unterschiedliche Lage des ersten optischen Mittels OP1, z.B. des Hohlspiegels, festgelegt wird. Ebenso ist es nach **Fig.**6 möglich, das virtuelle Bild am seitlichen Rand der Windschutzscheibe zu erzeugen, wiederum verursacht durch die Lage und die Anordnung des ersten optischen Mittels OP1.

Es kann zweckmäßig sein, daß nicht nur eine Person das virtuelle Bild betrachten kann, sondern mehrere Personen. Ein Beispiel zeigt **Fig.**7, bei dem zwei Personen virtuelle Bilder, die z.B. in der Windschutzscheibe eines Kfz erzeugt werden, beobachten können. Dabei ist es möglich, für jede Person ein eigenes virtuelles Bild einer Darstellung einer Information zu erzeugen oder gesteuert von einer Person ein virtuelles Bild für beide Personen. Damit ist es möglich, daß z.B. der Beifahrer mit einer Bedienanordnung die Information für den Fahrer abruft, so daß der Fahrer mit der Bedienung des Informationsanzeigesystems nicht belastet wird.

Ein weiters Ausführungsbeispiel, mit dem unterschiedliche Stellen des virtuellen Bildes erzeugbar sind, zeigt **Fig.**8. Hier ist das Ausgabedisplay DIS schwenkbar angeordnet, mit der Folge, daß an verschiedenen Stellen z.B. der Windschutzscheibe WS virtuelle Bilder entstehen können.

Das erste optische Mittel kann z.B. ein Spiegel sein, ein Hohlspiegel, es kann aber auch Teil der Windschutzscheibe WS sein, die dann entsprechend verspiegelt sein muß. Das erste optische Mittel muß auf jeden Fall ein Mittel sein, durch das die vom Ausgabedisplay ausgehenden Lichtstrahlen in die Blickrichtung der Person eingespiegelt wird und zudem teiltransparent ausgeführt sein, so daß ein virtuelles Bild für die Person erzeugt werden kann.

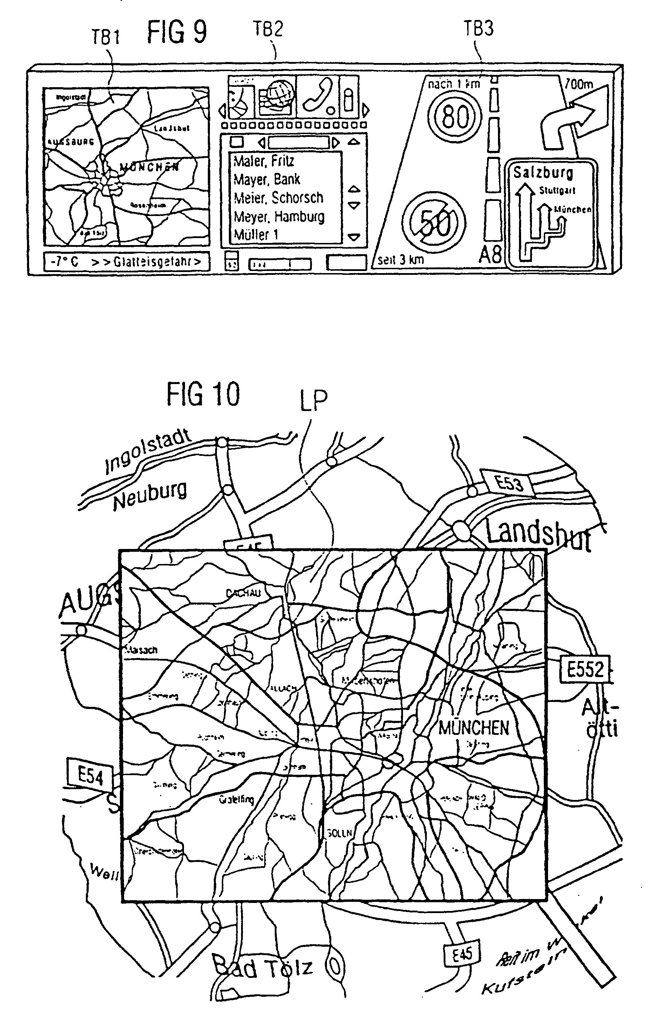

**Fig.**9 zeigt wie vom Ausgabedisplay erzeugte Darstellungen aussehen können. Eine solche Darstellung einer Information kann aus verschiedenen Teilbereichen TB bestehen. Ein erster Teilbereich TB1 kann ein Ausschnitt aus einer Landkarte darstellen, ein zweiter Teilbereich TB2 mehrere bedienbare Geräte zeigen, und ein dritter Teilbereich TB3 einen Ausschnitt einer Straße mit Richtungsanzeigen und Wegweiser darstellen. Die Landkarte kann z.B. so als virtuelles Bild erzeugt werden, wie es in **Fig.**10 gezeigt ist. Dort wird zunächst die Landkarte als Kugelkarte dargestellt und mit Hilfe einer Lupe LP ein zentraler Bereich dieser Karte vergrößert gezeigt.

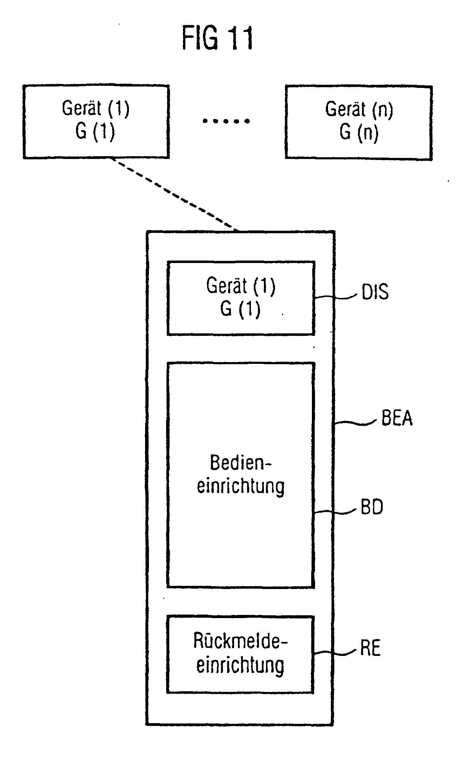

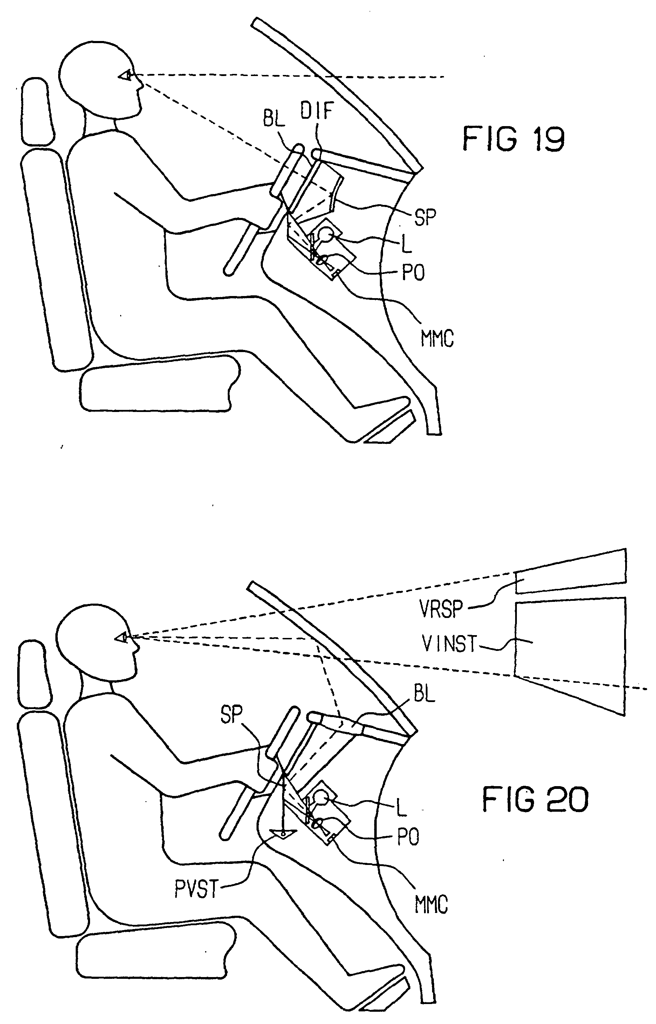

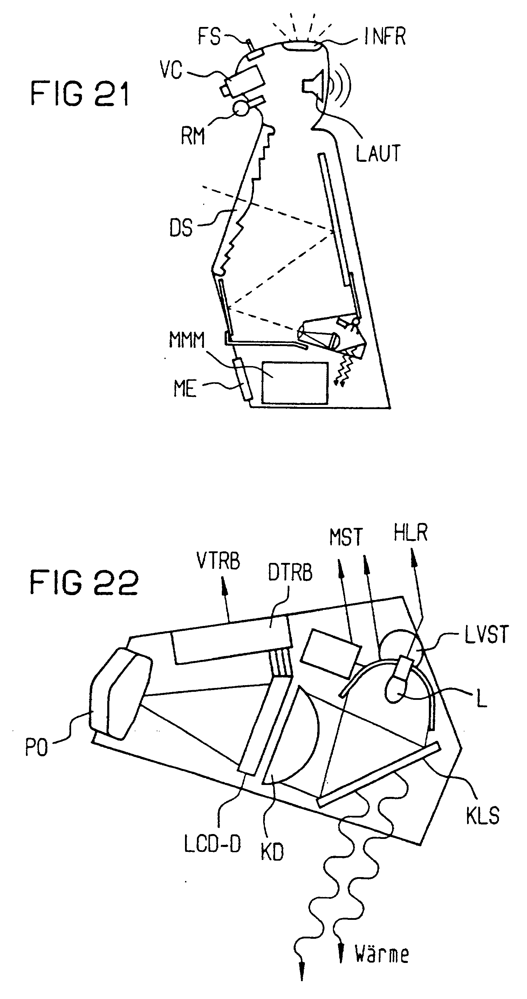

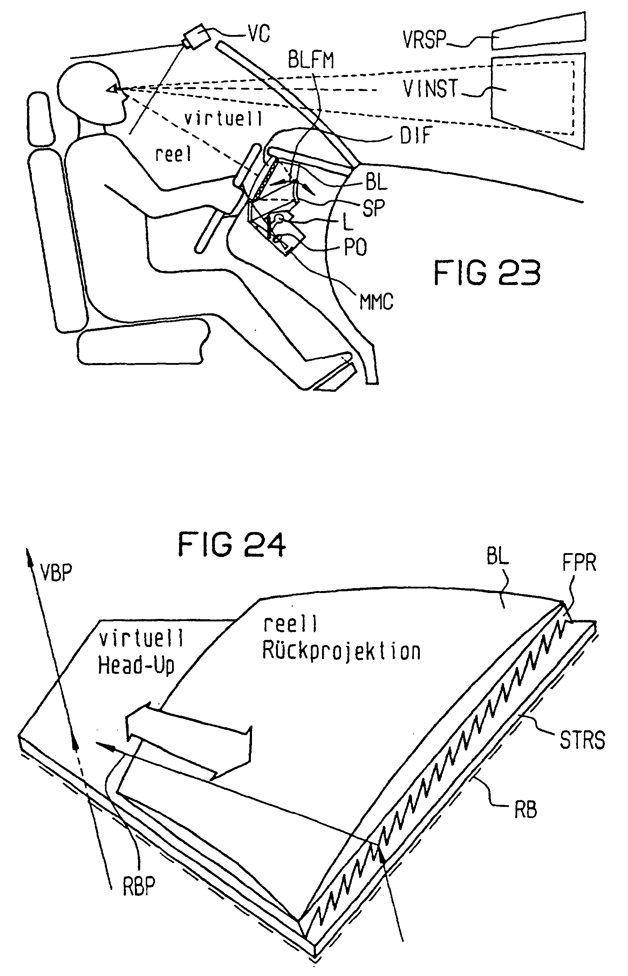

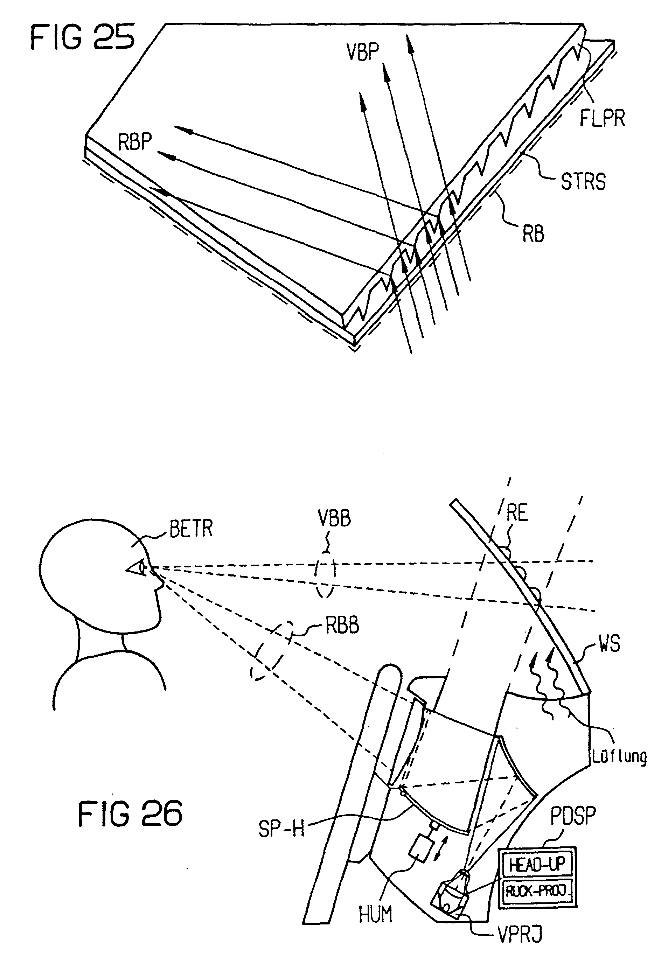

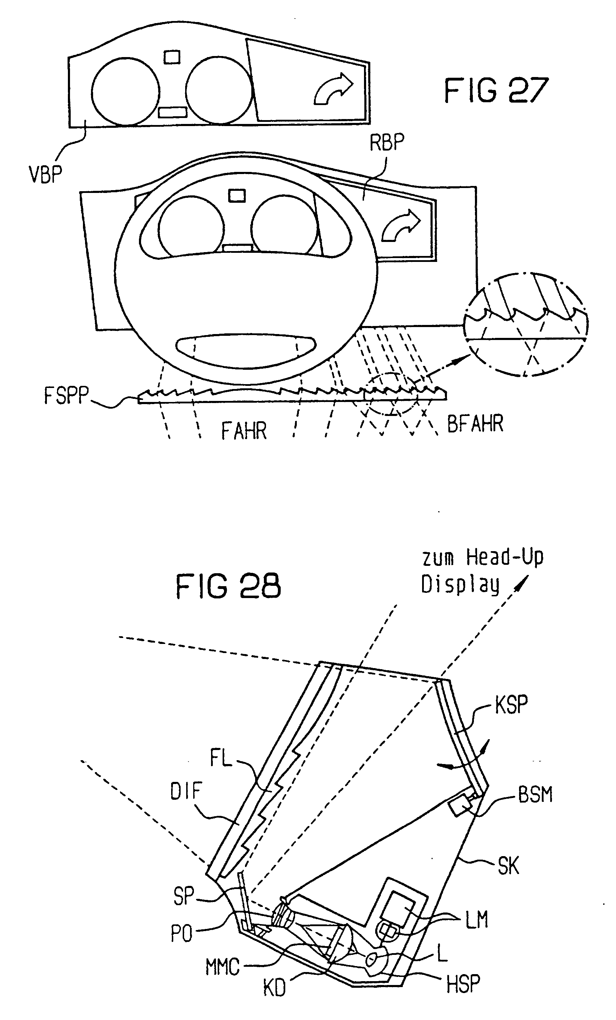

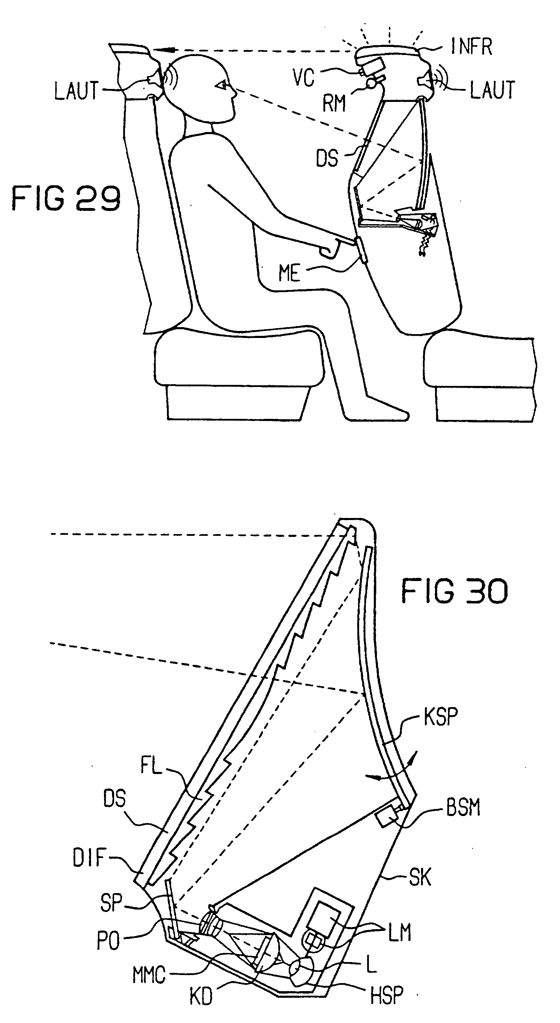

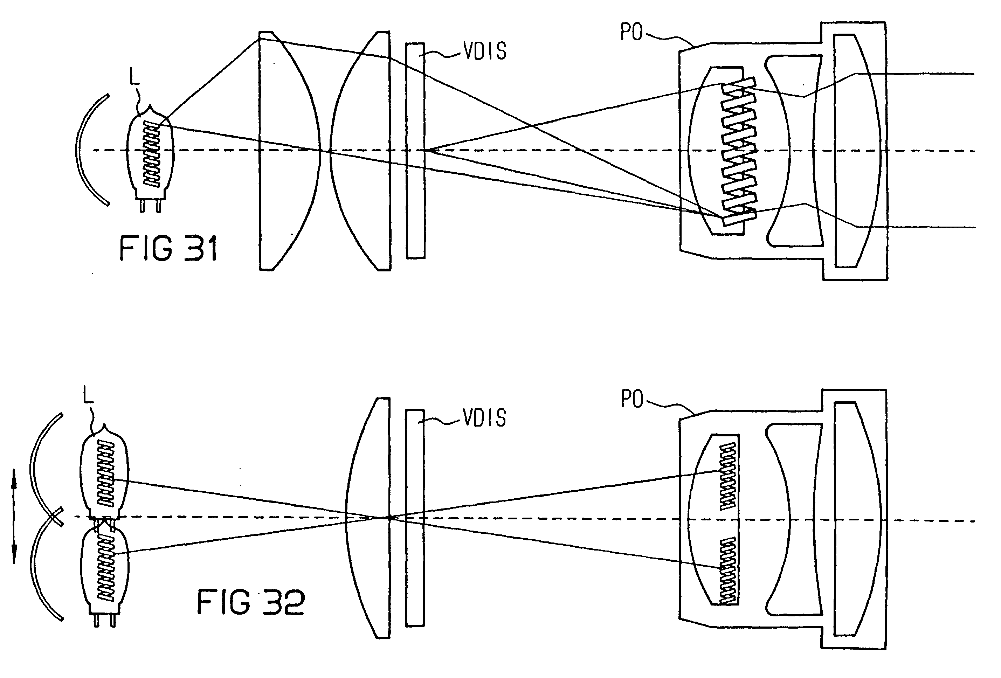

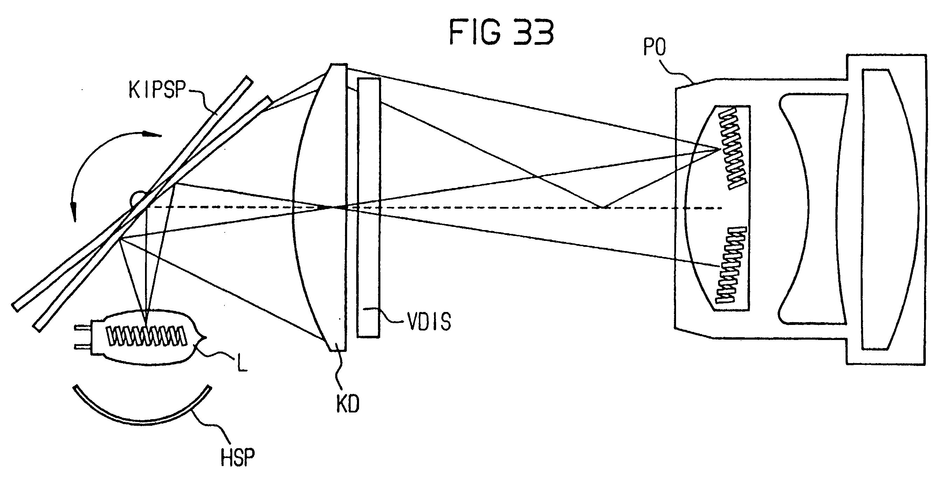

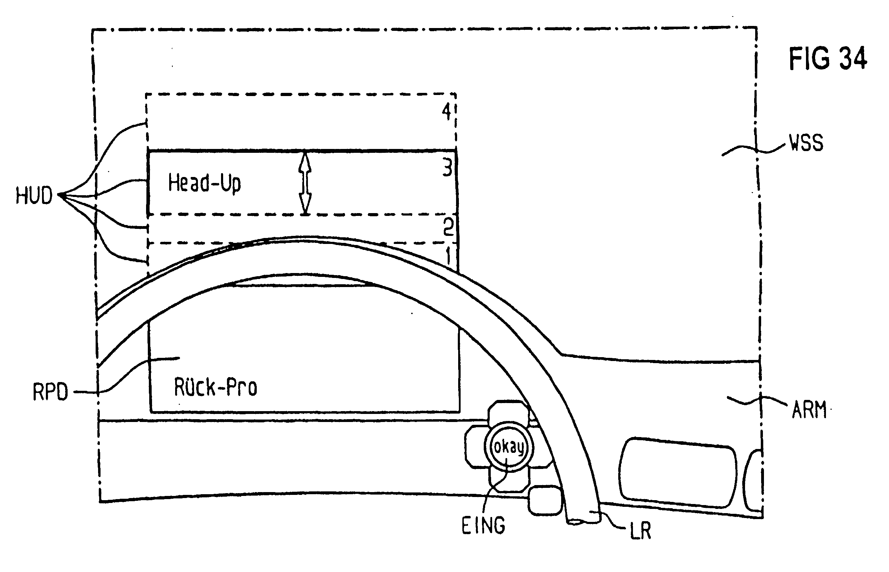

**Fig.**11 zeigt allgemein eine Anordnung zur Bedienung mehrerer Geräte G(1) bis G(n), z.B. eines Kfz und eines Telefons oder auch sonstiger Geräte oder Aggregate von Geräten oder deren Funktionen. Die Bedienanordnung für diese Geräte G ist mit BEA bezeichnet. Die Anordnung BEA ermöglicht die virtuelle Abbildung eines gerade angesteuerten Gerätes in einem Display DIS und weist eine Rückmeldeanordnung RE auf, zusätzlich die Bedieneinrichtung BD, die einen Navigator (nicht dargestellt) enthält. Eines der Geräte G(1) bis G(n) kann dadurch ausgewählt werden, daß die Bedieneinrichtung BD entsprechend bedient wird. Ist ein Gerät angesteuert worden, z.B. das Gerät G(1), dann wird es auf dem Display DIS dargestellt und die Auswahl des Gerätes wird über die Rückmeldeeinrichtung RE dem Anwender mitgeteilt.

In **Fig.**19 wird schematisch das Fahren im Kfz dargestellt. Dabei wird durch Videorückprojektion ein reelles Bild auf einem Diffusor DIF im Armaturenbrett dargestellt. Eine Beleuchtungslinse BL vor dem Diffusor DIF gewährleistet, daß dem Beobachter das projizierte Bild entsprechend hell und scharf dargeboten wird. Ein Projektionsdisplay besteht aus einem Videodisplay MMC, einer Lampe L und einem Projektionsobjektiv PO. Das Videodisplay MMC wird mit einer Lampe L beleuchtet und mit einem Projektionsobjektiv PO auf ein optisches Mittel zur Umlenkung des Strahlengangs geworfen.

In **Fig.**20 wird mittels Video-Rückprojektion in die Windschutzscheibe dem Fahrer eine Abbildung projiziert, die bei Betrachtung es nicht mehr erfordert, den Blick vom Verkehrsgeschehen abzuwenden. Diese virtuelle Instrumentierung VINST, sowie der virtuelle Rückspiegel VRSP kann jeweils oder in Kombination in der Position verstellt werden mittels Positionsverstellung PVST. Ansonsten ist die Anordnung wie **Fig**.19.

**Fig.**22 zeigt das Projektionsdisplay, das beispielhaft in **Fig.**21 in einem "Multimediastuhl" enthalten ist. Dieses Projektionsdisplay wird ebenso im Kfz eingesetzt. In **Fig.**21 ist die Rücksitzlehne des Multimediastuhls dargestellt, in der eine Videokamera VC, ein Richtmikrofon RM, ein Displayschirm DS, ein manuelles Eingabegerät ME, mindestens ein Lautsprecher LAUT, eine Infrarot-Schnittstelle INFR, eine GSM/DECT-Funk-Schnittstelle FS, das Projektionsdisplay und ein Multimedia-Motherboard MM enthalten sind. Über einen vorgebbaren Strahlengang wird dem Betrachter über den Displayschirm DS eine Abbildung dargestellt. Die Videokamera VC, zusammen mit dem Richtmikrofon RM und dem Lautsprecher LS ermöglicht dem Benutzer dieses Stuhls, multimediale Anwendungen wie beispielsweise Videokonferenz (über DECT/GSM-Schnittstelle) oder Internet. Der Benutzer kann interagieren über eine eigens dafür vorgesehene manuelle Eingabeschnittstelle ME. Das Multimedia-Motherboard ist eigens für die im Stuhl vorgesehenen Anwendungen ausgelegt und basiert auf Standard-Hardware.

Wie oben erwähnt, zeigt **Fig.**22 das Projektionsdisplay im Detail. Eine Lampe L ist dabei verstellbar über eine Lampenverstellung LVST, die durch eine Motorsteuerung MST durchgeführt wird, angeordnet. Die Helligkeit der Lampe L ist mittels eines Helligkeitsreglers HLR einstellbar. Das von der Lampe L austretende Licht wird von einem Kaltlichtspiegel KLS auf einen Kondensor KD umgelenkt und trifft dann auf das durchleuchtbare LCD-Display LCD-D, das angesteuert wird durch spezielle Display-Treiber DTRB und Videotreiber VTRB. Schließlich fällt der Abbildungsstrahl auf das Projektionsobjektiv PO und verläßt das Projektionsdisplay.

**Fig.**23 zeigt die Kombination aus **Fig**.19 und **Fig.**20 mit Erweiterungen. Es werden also das virtuelle Head-Up-Display VINST/VRSP und das reelle rückprojizierte Bild auf dem Diffusor DIF kombiniert zur Anzeige gebracht. Somit kann der Fahrer entscheiden, welche Darstellung er bevorzugt bzw. welche Information er auf welcher Anzeige zu sehen wünscht. Weiterhin ist das Head-Up-Display verdunkelbar. Zusätzlich ist noch ein Blickfolgermotor BLFM vorhanden, der die Verstellung des Spiegels SP ermöglicht. Damit wird die Lage des Displays an den Fahrer angepaßt. Der Beleuchtungsstrahlengang des jeweiligen Projektionsdisplays wird ist auf die Augen des Fahrers gerichtet. Eine Mittel zur Nachregelung des Spiegels SP ist derart ausgeführt, daß die Position des Kopfes des Fahrers mittels Videokamera VC überwacht wird und bei Veränderung der Spiegel SP entsprechend gekippt wird, so daß der Beleuchtungsstrahlengang wieder auf die Augen des Fahrers zentriert ist. Ein Mittel zur Regelung der Helligkeit des Projektionsdisplays ist derart ausgeführt, daß die Videokamera VC das Gesicht des Fahrers als Referenzfläche für die Helligkeitsermittlung benutzt und entsprechend der Helligkeit der Umgebung die Helligkeit des Projektionsdisplays auf einen vorgebbaren Wert regelt.

In **Fig.**24 ist eine verschiebbare Einheit aus einem Fresnel-Prisma FPR zur Ablenkung und einer Beleuchtungslinse BL zur Bündelung des Beleuchtungsstrahlengangs dargestellt. Die Bereiche, die von der verschiebbaren Einheit abgedeckt werden, bilden das Rückprojektionsdisplay RBP, die nicht abgedeckten Bereiche sind Teile des Head-Up-Displays VBP. An einer Streuscheibe geringer Opazität STRS wird das reelle Bild RB abgebildet.

**Fig.**25 zeigt eine Fresnel-Anordnung für ein Projektionsdisplay, das gleichzeitig eine virtuelle Projektion in das Head-Up-Display VBP und eine reelle Rückprojektion RBP vornimmt. Hier erfolgt eine Verdunklung des Head-Up-Displays mechanisch oder elektromechanisch, indem der Strahlengang zum Head-Up-Display unterbrochen wird. Wie auch in **Fig.**24 ist in **Fig.**25 das reelle Bild an einer Streuscheibe geringer Opazität STRS vorhanden. Die Fresnel-Anordnung besteht aus einem alternierenden Fresnel-Linsen-Prisma FLPR.

In **Fig.**26 wird ein Querschnitt im Cockpit eines Kfz gezeigt, in dem ein Betrachter BETR ein virtuelles Head-Up-Display VBB und ein konventionelles Display RBB sieht. Bilden sich auf der Windschutzscheibe WS Wassertropfen, z.B. bei Regen RE, aus, so ist die Sicht auf das Verkehrsgeschehen mittels Head-Up-Display, besonders bei Nacht, stark behindert. Die in **Fig.**25 beschriebene Fresnel-Anordnung wird in diesem Fall nur noch für die reelle Rückprojektion benutzt, d.h. das Head-Up-Display wird abgeschaltet, indem ein Head-Up-Motor HUM den Spiegel für die Ablenkung zum Head-Up-Display Sp-H so bewegt, daß der Strahlengang nicht mehr in die Windschutzscheibe projiziert wird. Das Head-Up-Display ist somit abgeschaltet. Auch sind in **Fig.**26 zur Vollständigkeit das Projektionsdisplay PDSP und ein Videoprojektor VPRJ dargestellt.

**Fig.**27 stellt die Sicht auf die Armaturen dar, wobei das Head-Up-Display VBP und das Rückprojektionsdisplay RBP eingezeichnet sind. Der Fahrer FAHR sieht gleichzeitig das Head-Up-Display VBP und das Rückprojektionsdisplay RBP. Der Beleuchtungsstrahlengang folgt allen Bewegungen des Fahrers FAHR. Um auch dem Beifahrer BFAHR Einblick auf eine vorgebbare Auswahl von Anzeigen zu ermöglichen, wird in diese Teile der Anzeige ein zusätzlicher Beleuchtungsstrahlengang zum Beifahrer BFAHR gelenkt. Dazu wird eine Fresnelspiegelplatte FSPP mit einer Unterstruktur für den erweiterten Beleuchtungsstrahlengang verwendet.

**Fig.**28 stellt eine Weiterbildung der in **Fig.**25 beschriebenen Fresnel-Anordnung dar. Hier wird eine Kombination von Fresnel-Prisma zur Lichtablenkung und von Fresnel-Linse zur verstärkten Lichtbündelung, letztere im Zusammenhang mit einer aufweitenden aber Bauvolumen sparenden Konvexlinse im Rückprojektionsdisplay verwendet. Die Einblickrichtung des Rückprojektionsdisplays kann mit dem Spiegel über einen Blickfolgerstellmotor BSM geschwenkt werden. Ansonsten sind wieder die bekannten Elemente wie in den oben beschriebenen Figuren vorhanden.

In **Fig.**29 ist der Multimediasitz von **Fig.**21 aufgegriffen und in seiner funktionellen Integration dargestellt. Zusätzlich zu **Fig**.21 sei noch erwähnt, daß der zu einem Multimediastuhl gehörende Lautsprecher LAUT über die Infrarot-Schnittstelle INFR des vorangehenden Stuhls gespeist wird. Alle anderen Komponenten der **Fig.**29 sind in **Fig.**21 beschrieben.

**Fig.**30 ist im wesentlichen gleich **Fig.**28, nur daß keine, wie im Kfz möglich, Möglichkeit der virtuellen Projektion in ein Head-Up-Display gegeben ist. Der Displayschirm DS ist leicht diffus. Durch den kameragesteuerten Pupillenservo wird zugunsten der Lichtstärke auf große Betrachtungswinkel verzichtet.

**Fig.**31 zeigt eine klassischen Köhlerschen Beleuchtungsstrahlengang. Die Lampe L wird zur gleichmäßigen Bestrahlung eines Videodisplays VDIS aufgeweitet und die Kondensorvergrößerung wird so gewählt, daß das Bild der Lampe L die Objektiv-Apertur gerade ganz ausfüllt. Bei dem Beleuchtungsstrahlengang für den Pupillen-Servo in **Fig.**32 ist die Beleuchtungspupille je nach erforderlichem Projektionswinkel verschiebbar angeordnet.

In **Fig.**33 schließlich wird der Beleuchtungsstrahlengang der Lampe L durch einen Kippspiegel KIPSP auf den Kondensor KD zum Videodisplay VDIS gelenkt. Die Beleuchtungspupille ist wie in Fig.32 verschiebbar, allerdings muß in Fig.33 nur der verhältnismäßig leichte Kippspiegel KIPSP bewegt werden.

In **Fig.**34 wird die Erfindung am Beispiel eines Kraftfahrzeugs veranschaulicht. Die kombinierte Anzeigevorrichtung ist zum Teil realisiert als Rückprojektionsdisplay RPD im Armaturenbrett ARM und zum Teil als Head-Up-Display HUD in der Windschutzscheibe WSS des Fahrzeugs. Dabei ist das Head-Up-Display HUD veränderbar ausgeführt. Je nach Anwendungsbereich, z.B. Menge der darzustellenden Information, kann die Größe des Head-Up-Displays erweitert werden, so daß es die in **Fig**.34 angedeuteten Bereiche 1, 2, 3 und 4 umfaßt. Entsprechend kann sich das Head-Up-Display auch über einen vorgebbar großen Teil der Windschutzscheibe erstrecken.

Die Erfindung ermöglicht es nun, gemäß der beschriebenen Anordnung eine Darstellung zum Teil in das Head-Up-Display zu projizieren, und zum Teil in der rückprojizierten Form darzustellen. In der Einheit aus beiden Anzeigeeinrichtungen kann nun Information geeignet dargestellt werden. Somit ist es möglich, eine Liste mit Telefonnummern nach einem vorgebbaren Kriterium sortiert derart darzustellen, daß im oberen Teil des Head-Up-Display HUD hochpriore Daten und im Rückprojektionsdisplay nunmehr niederpriore Daten dargestellt werden. Eine Auswahl, z.B. einer Telefonnummer aus einer Liste, erfolgt mittels der in **Fig.**34 angedeuteten Eingabeeinheit EING, die sich vorteilhaft am Lenkrad LR befindet, um dem Fahrer auch während der Fahrt eine sichere Bedienung dieser Eingabeeinheit EING zu gewährleisten.

Jede Teil-Anzeigeeinrichtung kann anwendungsspezifisch konfiguriert werden und geeignet auf Umweltreize, wie z.B. Glatteisgefahr oder plötzliche Geschwindigkeitsbegrenzung, oder Bedienunganforderungen, z.B. ankommender Anruf, reagieren, indem eine entsprechende Anzeige dem Bediener (hier: Fahrer) dargeboten wird.

Es können demnach beispielsweise
- Instrumente wie z.B. Tachometer, Tankanzeige, Licht-Kontrollanzeige,
- virtuelle Geräte wie z.B. Radio, Navigationsgerät, Telefon und
- virtuelle Bedienelemente wie z.B. Richtungstasten, Telefontastatur, Auswahlbalken als scrollbarer Hintergrund in Listen
in der kombinierten Anzeigeeinrichtung dargestellt werden.

Somit leistet die Erfindung eine Beitrag zur ergonomischen Darstellung von Information und ermöglicht auch im Hinblick auf die dynamischen Darstellungsmöglichkeiten eine flexible Anpassung an vorgebbare Anforderungen.

Abschließend sei bemerkt, daß es sich bei der Anzeigevorrichtung im Armaturenbrett auch um bspw. ein einfaches Display anstelle des rückprojizierten Displays RPD handeln kann.

## Patentansprüche

1. Informationsanzeigesystem für mindestens eine Person (PE, BETR, FAHR),
a) bei dem eine erste Anzeigeeinheit (VINST, VRSP, VBB) zur Darstellung von Information in der Windschutzscheibe (WS, WSS) eines Fahrzeugs als ein Head-Up-Display und eine zweite Anzeigeeinheit (RBB) zur Darstellung von Information auf und/oder in dem Armaturenbrett (ARM) des Fahrzeugs vorgesehen ist;
b) bei dem ein Beleuchtungsstrahlengang vorgesehen ist, über den die Information darstellbar ist;
c) bei dem stufenlos Teile der Information in der ersten Anzeigeeinheit (VINST, VRSP, VBB) und/oder in der zweiten Anzeigeeinheit (RBB) darstellbar sind, indem ein Fresnel-Prisma (FPR) zur Ablenkung eines Bereichs des Beleuchtungsstrahlengangs vorgesehen ist, das in dem Beleuchtungsstrahlengang verschiebbar ausgeführt ist, und
d) bei dem optische Mittel (OP1, OP2) vorgesehen sind, die die Darstellung von Information durch die erste Anzeigeeinheit (VINST, VRSP, VBB) in einer Blickrichtung der Person (PE, BETR, FAHR) bewirken, indem der Beleuchtungsstrahlengang auf die Blickrichtung der Person (PE, BETR, FAHR) adaptierbar ist.

2. Informationsanzeigesystem nach Anspruch 1,
bei dem eine Anzeigeeinheit anhand eines Projektionsdisplays (PDSP) ausgeführt ist, das aus einem Videodisplay (VDIS, MMC), einer Lichtquelle (L) und einer Verstellmöglichkeit für die Lichtquelle (L) besteht.

3. Informationsanzeigesystem nach Anspruch 2,
bei dem das Videodisplay (VDIS, MMC) mit einem Rechner ansteuerbar und von der Lichtquelle (L) durchleuchtbar ist.

4. Informationsanzeigesystem nach Anspruch 2 oder 3,
bei dem das Videodisplay (VDIS, MMC) mit einem Mittel (HLR) zur Anpassung der Helligkeit ausgestaltet ist, wobei einschwenkbare Graufilter oder gegeneinander verdrehbare Polarisationsfilter zur Lichtabsorption vorgesehen sind, so daß das Projektionsdisplay (PDSP) abdunkelbar ist.

5. Informationsanzeigesystem
nach einem der Ansprüche 1 bis 4,
bei dem ein Mittel (HLR) vorgesehen ist, das eine erste Helligkeit einer Anzeigeeinheit (VINST, VRSP, VBB) an eine zweite Helligkeit der zu beobachtenden Szene anpaßt, indem die zweite Helligkeit als Kriterium für eine Regelung der ersten Helligkeit ermittelt wird.

6. Informationsanzeigesystem
nach einem der vorhergehenden Ansprüche,
bei dem mindestens eine Linse (BL) vorgesehen ist, wobei das Fresnel-Prisma (FPR) den Beleuchtungsstrahlengang in das Auge eines Betrachters (PE, BETR, FAHR) lenkt und die Linse (BL) den Beleuchtungsstrahlengang bündelt.

7. Informationsanzeigesystem
nach einem der vorhergehenden Ansprüche,
a)bei dem ein erster Teil (RBB) des Informationsanzeigesystems entweder als eine herkömmliche Anzeigevorrichtung oder als ein Rückprojektionsdisplay ausgeführt ist,
b)bei der ein zweiter Teil (VINST, VRSP, VBB) des Informationsanzeigesystems als das Head-Up-Display ausgeführt ist,
c)bei der der erste Teil (RBB) mit dem zweiten Teil (VINST, VRSP, VBB) des Informationsanzeigesystems eine kombinierte Anzeigevorrichtung zur Darstellung von Information bildet.

8. Informationsanzeigesystem
nach einem der vorhergehenden Ansprüche,
bei dem das Head-Up-Display (VINST, VRSP, VBB) in seiner Größe veränderlich ist.

9. Informationsanzeigesystem
nach Anspruch 7,
bei dem durch ein Mittel zur Darstellung in der kombinierten Anzeigevorrichtung eine Selektion nach hochpriorer und niederpriorer Information durchgeführt wird und gemäß dieser Priorisierung die Information einem Benutzer in einer Hauptbetrachtungsrichtung, also im Head-Up-Display (VINST, VRSP, VBB) bei hochpriorer Information, und in einer Nebenbetrachtungsrichtung, also im ersten Teil (RBB) des Informationsanzeigesystems bei niederpriorer Information, dargestellt wird.

10. Informationsanzeigesystem nach Anspruch 9,
bei dem Daten sortiert nach ihrer Priorität auf der kombinierten Anzeigevorrichtung dargestellt werden.

11. Informationsanzeigesystem
nach einem der Ansprüche 7 bis 10,
bei dem der erste Teil (RBB) des Informationsanzeigesystems und der zweite Teil (VINST, VRSP, VBB) des Informationsanzeigesystems gleiche Breite besitzen und jeweils breiter als hoch ausgeführt sind.

12. Informationsanzeigesystem
nach einem der vorhergehenden Ansprüche,
bei dem in dem Head-Up-Display (VINST, VRSP, VBB) eine entzerrte Abbildung abhängig von der Betrachterposition darstellbar ist, indem auf dem Videodisplay (VDIS, MMC) ein entsprechend zur Betrachterposition vorverzerrtes Bild, das invers zu den durch die Windschutzscheibe (WS, WSS) bewirkten Verzerrungen ist, einspielbar ist.

## Claims

1. Information display system for at least one person (PE, BETR, FAHR),
a) in which a first display unit (VINST, VRSP, VBB) for displaying information in the windscreen (WS, WSS) of a vehicle as a head-up display and a second display unit (RBB) for displaying information on and/or in the dashboard (ARM) of the vehicle are provided;
b) in which an illumination beam path is provided, via which the information can be displayed;
c) in which parts of the information can be displayed continuously variably in the first display unit (VINST, VRSP, VBB) and/or in the second display unit (RBB) by virtue of the provision of a Fresnel prism (FPR) for deflecting a region of the illumination beam path, which is embodied such that it can be displaced in the illumination beam path, and
d) in which optical means (OP1, OP2) are provided, which effect the display of information by the first display unit (VINST, VRSP, VBB) in a viewing direction of the person (PE, BETR, FAHR) by virtue of the illumination beam path being adaptable to the viewing direction of the person (PE, BETR, FAHR).

2. Information display system according to Claim 1,
in which a display unit is embodied using a projection display (PDSP), which comprises a video display (VDIS, MMC), a light source (L) and a possibility of adjustment for the light source (L).

3. Information display system according to Claim 2,
in which the video display (VDIS, MMC) can be driven by a computer and can be transilluminated by the light source (L).

4. Information display system according to Claim 2 or 3,
in which the video display (VDIS, MMC) is equipped with a means (HLR) for adapting the brightness, provision being made of neutral density filters that can be pivoted in or polarization filters that can be rotated relative to one another for light absorption purposes, so that the projection display (PDSP) can be darkened.

5. Information display system according to one of Claims 1 to 4,
in which a means (HLR) is provided which adapts a first brightness of a display unit (VINST, VRSP, VBB), to a second brightness of the scene to be observed, by determining the second brightness as a criterion for regulation of the first brightness.

6. Information display system according to one of the preceding claims,
in which at least one lens (BL) is provided, the Fresnel prism (FPR) directing the illumination beam path into the eye of an observer (PE, BETR, FAHR) and the lens (BL) focussing the illumination beam path.

7. Information display system according to one of the preceding claims,
a) in which a first part (RBB) of the information display system is embodied either as a conventional display device or as a back projection display,
b) in which a second part (VINST, VRSP, VBB) of the information display system is embodied as the head-up display,
c) in which the first part (RBB), together with the second part (VINST, VRSP, VBB) of the information display system, forms a combined display device for displaying information.

8. Information display system according to one of the preceding claims,
in which the size of the head-up display (VINST, VRSP, VBB) is variable.

9. Information display system according to Claim 7,
in which a selection according to high-priority and low-priority information is implemented by a means for display in the combined display device and, in accordance with this prioritization, the information is displayed to a user in a main viewing direction, that is to say in the head-up display (VINST, VRSP, VBB) in the case of high-priority information, and in an auxiliary viewing direction, that is to say in the first part (RBB) of the information display system in the case of low-priority information.

10. Information display system according to Claim 9,
in which data are displayed in a manner sorted according to their priority on the combined display device.

11. Information display system according to one of Claims 7 to 10,
in which the first part (RBB) of the information display system and the second part (VINST, VRSP, VBB) of the information display system have the same width and are in each case embodied with their width greater than their height.

12. Information display system according to one of the preceding claims,
in which it is possible to display an equalized imaging depending on the viewer position in the head-up display (VINST, VRSP, VBB) by the insertion, on the video display (VDIS, MMC), of an image which is predistorted correspondingly with respect to the viewer position and is the inverse of the distortions effected by the windscreen (WS, WSS).

## Revendications

1. Système d'affichage d'informations pour au moins une personne (PE, BETR, FAHR),
a) dans lequel une première unité d'affichage (VINST, VRSP, VBB) est prévue pour la présentation d'informations sur la vitre du pare-brise (WS, WSS) d'un véhicule, en tant qu'affichage tête haute, et une deuxième unité d'affichage (RBB) est prévue pour la présentation d'informations sur et/ou dans le tableau de bord (ARM) du véhicule;
b) dans lequel est prévu un parcours de faisceau d'éclairage par lequel les informations peuvent être présentées;
c) dans lequel des parties d'informations peuvent être présentées sans discontinuité dans la première unité d'affichage (VINST, VRSP, VBB) et/ou dans la deuxième unité d'affichage (RBB), un prisme de Fresnel (FPR) étant prévu pour dévier une zone du parcours du faisceau d'éclairage et est réalisé de manière à pouvoir se déplacer dans le parcours du faisceau d'éclairage, et
d) dans lequel sont prévus des moyens optiques (OP1, OP2) qui ont pour effet la présentation d'informations par la première unité d'affichage (VINST, VRSP, VBB) dans une direction du regard de la personne (PE, BETR, FAHR), par le fait que le parcours du faisceau d'éclairage peut être adapté à la direction du regard de la personne (PE, BETR, FAHR).

2. Système d'affichage d'informations selon la revendication 1, dans lequel une unité d'affichage est réalisée à l'aide d'un affichage par projection (PDSP) qui est constitué d'un affichage vidéo (VDIS, MMC), d'une source de lumière (L) et d'une possibilité d'ajustement de la source de lumière (L).

3. Système d'affichage d'informations selon la revendication 1, dans lequel l'affichage vidéo (VDIS, MMC) peut être commandé par un calculateur et peut être éclairé par la source de lumière (L).

4. Système d'affichage d'informations selon la revendication 2 ou 3, dans lequel l'affichage vidéo (VDIS, MMC) est configuré avec un moyen (HLR) pour l'adaptation de la clarté, des filtres gris rabattables ou des filtres polarisants aptes à tourner l'un par rapport à l'autre étant prévus pour l'absorption de la lumière, de telle sorte que l'affichage par projection (PDSP) puisse être assombri.

5. Système d'affichage d'informations selon l'une des revendications 1 à 4, dans lequel est prévu un moyen (HLR) qui adapte une première clarté d'une unité d'affichage (VINST, VRSP, VBB) à une deuxième clarté de la scène à observer, en déterminant la deuxième clarté en tant que critère pour un réglage de la première clarté.

6. Système d'affichage d'informations selon l'une des revendications précédentes, dans lequel est prévue au moins une lentille (BL), le prisme de Fresnel (FPR) déviant le parcours du faisceau d'éclairage vers l'oeil d'un observateur (PE, BETR, FAHR) et la lentille (BL) concentre le parcours du faisceau d'éclairage.

7. Système d'affichage d'informations selon l'une des revendications précédentes,
a) dans lequel une première partie (RBB) du système d'affichage d'informations est réalisée soit comme dispositif d'affichage classique soit comme affichage par rétroprojection,
b) dans lequel une deuxième partie (VINST, VRSP, VBB) du système d'affichage d'informations est réalisée comme affichage tête haute,
c) dans lequel la première partie (RBB) forme avec la deuxième partie (VINST, VRSP, VBB) du système d'affichage d'informations un dispositif d'affichage combiné pour la présentation d'informations.

8. Système d'affichage d'informations selon l'une des revendications précédentes, dans lequel la taille de l'affichage tête haute (VINST, VRSP, VBB) peut être modifiée.

9. Système d'affichage d'informations selon la revendication 7, dans lequel un moyen de présentation dans le dispositif d'affichage combiné exécute une sélection d'informations en fonction d'une priorité élevée et d'une priorité basse, et en fonction de cette priorité, les informations sont présentées à un utilisateur dans un dispositif d'observation principale, c'est-à-dire dans l'affichage tête haute (VINST, VRSP, VBB) pour des informations de haute priorité, et dans un dispositif d'observation secondaire, et donc dans la première partie (RBB) du système d'affichage d'informations pour des informations de priorité plus basse.

10. Système d'affichage d'informations selon la revendication 9, dans lequel des données triées en fonction de leur priorité sont présentées sur le dispositif d'affichage combiné.

11. Système d'affichage d'informations selon l'une des revendications 7 à 10, dans lequel la première partie (RBB) du système d'affichage d'informations et la deuxième partie (VINST, VRSP, VBB) du système d'affichage d'informations présente la même largeur et sont chacune réalisées plus larges que hautes.

12. Système d'affichage d'informations selon l'une des revendications précédentes, dans lequel une image corrigée peut être présentée sur l'affichage tête haute (VINST, VRSP, VBB) en fonction de la position de l'observateur, en réfléchissant sur l'affichage vidéo (VDIS, MMC) une image prédéformée en correspondance à la position de l'observateur de manière inverse aux distorsions provoquées par la vitre de pare-brise (WS, WSS).
